# EUROPÄISCHE PATENTSCHRIFT

(11) **EP 0 539 797 B1**
(45) Veröffentlichungstag und Bekanntmachung des Hinweises auf die Patenterteilung: **14.05.1997**
(21) Anmeldenummer: 92117544.4
(22) Anmeldetag: 14.10.1992
(51) Int. Cl.: H04M 1/02

(54) **Fernsprechstation für Tisch-und Wandbetrieb**
Wall- or desk-mounted telephone
Poste téléphonique de table ou mural

(30) Priorität: 30.10.1991 DE 4135791
(43) Veröffentlichungstag der Anmeldung: 05.05.1993
(73) Patentinhaber: SIEMENS AKTIENGESELLSCHAFT, 80333 München (DE)
(72) Erfinder: Osterloh, Hans-Dieter, Dipl.-Ing., W-4292 Rhede (DE)

(56) Entgegenhaltungen:
- EP-A- 0 203 476
- DE-U- 9 100 431
- PATENT ABSTRACTS OF JAPAN vol. 9, no. 302 (E-362)25. Juli 1985 & JP-A-60 140 963

## Beschreibung

Die vorliegende Erfindung beinhaltet eine Fernsprechstation für Tisch- und Wandbetrieb mit zumindest einer im stationären Ablageteil an dessen Außenfläche vorgesehenen Ablagemulde für den Handapparat, wobei im Randbereich der Ablagemulde ein Einsatz in einen von außen frei zugänglichen Aufnahmebereich einbringbar ist, wobei der Einsatz bei Verwendung der Fernsprechstation als Tischgerät mit dem Randbereich der Ablagemulde bündig abschließt, während der Einsatz bei Verwendung der Fernsprechstation als Wandgerät den Randbereich der Ablagemulde überragt und mit diesem überragenden Bereich in eine Vertiefung im Handapparat eingreift.

Durch die DE-A 32 07 824 ist ein Einsatz im Inneren der Fernsprechstation bekannt geworden, der sich einmal bei Tischbetrieb der Fernsprechstation an die Konturen der Ablagemulde anpaßt, während er bei Wandbetrieb der Fernsprechstation mit einer Nase eine Ausnehmung in demjenigen Randbereich der Ablagemulde durchgreift, der die Auflage für den Handapparat bildet. Bei dieser bekannten Ausführungsform ist es einmal als nachteilig anzusehen, daß der Einsatz mit der Fernsprechstation verschraubt ist, so daß zum Lösen der Verbindung jeweils ein Werkzeug in Form eines Schraubendrehers erforderlich ist. Ein weiterer Nachteil besteht darin, daß ein Wechsel der Einbaulage des Einsatzes jeweils ein zusätzliches Öffnen und nach erfolgtem Umbau ein erneutes Verschließen der Fernsprechstation erfordert.

Dieser letztgenannte Nachteil tritt bei einer Fernsprechstation nicht auf, die durch die US-A- 4,395,591 bekannt geworden ist. Bei dieser Ausführungsform befindet sich im Bereich einer Ablagemulde am Gehäuseteil ein rechteckförmige Vertiefung, die zur Aufnahme des eine Nase aufweisenden Einsatzes dient. Auch bei dieser bekannten Anordnung muß es als nachteilig erachtet werden, daß der Einsatz mit der Fernsprechstation verschraubt ist. Zur Abdeckung der Schraubverbindung werden weiterhin streifen- und kappenförmige Elemente verwendet, so daß der Wechsel der Einbaulage des Einsatzes einen nicht unerheblichen Zeit- und Montageaufwand erfordert.

Es ist weiterhin eine Ausführungsform (europäisches Patent EP-A-0 203 476) bekannt, bei der die Aufnahme für den Einsatz im Bereich der Ablagemulde dadurch gebildet wird, daß zwei Seitenwände der Ausnehmung über einen Steg miteinander verbunden sind. Dieser Steg wird wiederum von den zueinander weisenden und voneinander beabstandeten Enden eines einen doppel-U-förmigen Querschnitt aufweisenden Einsatzes untergriffen. Weiterhin sind zur Führung und Auflage des Einsatzes an den genannten Seitenwänden einstückig mit diesen verbundene und in die Ausnehmung hineinragende Ansätze vorgesehen.

Bei dieser Ausführungsform muß der relativ komplizierte Aufbau des Einsatzes sowie die spritztechnisch schwierig herzustellende Form der Ausnehmung im Bereich der Ablagemulde als nachteilig empfunden werden.

Eine einfachere Form der Umrüstung einer Fernsprechstation von Tisch- auf Wandbetrieb ist dem DE-U- 91 00 431 zu entnehmen. Hierbei wird der Einsatz in eine Ausnehmung eingedrückt, die durch einen die Ablagemulde oben abschließenden Bereich des Stationsgehäuses sowie durch in den Innenraum des Stationsgehäuses hineinragende Auflagen und eine Federzunge gebildet ist, wobei die Federzunge mit einem Rastelement jeweils in eine der jeweiligen Gebrauchslage der Fernsprechstation entsprechende Ausnehmung im Einsatz eingreift.

Bei Fernsprechstationen mit einer flachen Ablagemulde besteht die Gefahr, den Handapparat leicht versetzt aufzulegen, ohne daß es vom Benutzer bemerkt wird. Dadurch wird der Gabelumschalter nicht mehr betätigt und die Fernsprechstation ist für weitere Anrufe nicht mehr benutzbar. Um diesem Nachteil abzuhelfen, kann z. B. die mittig in Auflagerichtung verlaufende Schaltleiste über den Randbereich der Ablagemulde hinweg verlängert werden. Die Verlängerung der Schaltleiste hat jedoch zur Folge, daß die zuvor erwähnten und im tiefsten Punkt des Randbereiches der Ablagemulde angeordneten Einsätze nicht mehr zum Einsatz gelangen können.

Aufgabe der vorliegenden Erfindung ist es daher, einen Einsatz aufzuzeigen, der auch bei der zuletzt genannten Gestaltung einer Fernsprechstation eingesetzt werden kann und der jederzeit eine Umrüstung auf zwei Betriebslagen der Fernsprechstation ohne Zuhilfenahme von Werkzeugen gestattet. Diese Aufgabe wird dadurch gelöst, daß der Einsatz doppel-U-förmig gestaltet ist, wobei ein Basissteg beiden unter einem Winkel von 90° angeordneten U-förmigen Bereichen des Einsatzes gemeinsam zugeordnet ist, daß weiterhin die Schenkel der U-förmigen Bereiche des Einsatzes unterschiedlich lang gestaltet sind und je nach Verwendungszweck der Fernsprechstation als Tisch- oder Wandgerät in einen Aufnahmeraum im Inneren der Fernsprechstation einbringbar sind, wobei ferner im eingebrachten Zustand des Einsatzes ein federndes Rastelement mit dem Einsatz verrastet.

Eine derartige Gestaltung des Einsatzes kann in vorteilhafter Weise nicht nur bei der letztgenannten Ausführungsform von Fernsprechstationen, sondern bei allen handelsüblichen Fernsprechstationen Verwendung finden. Bei der zuletzt aufgeführten Form von Fernsprechstationen befindet sich die über den Randbereich der Ablagemulde verlängerte Schalteleiste jeweils zwischen den Schenkeln der U-förmigen Bereiche des Einsatzes, so daß deren Betätigung in keiner Weise behindert wird. Auch in diesem Fall kann das Umrüsten von Tisch- auf Wandbetrieb der Fernsprechstation in einfacher Weise durch Entriegelung des Rastelementes, Drehung des Einsatzes um 180° in die gewünschte Gebrauchslage und anschließendes Eindrücken eines der ungleich lang gestalteten Schenkelpaare der U-förmigen Bereiche in den genannten Aufnahmeraum bewerkstelligt werden.

Die Verrastung des eingedrückten Einsatzes kann dabei vorzugsweise in der Weise erfolgen, daß das Rastelement als federnder Steg mit einem an seinem freien Ende angeordneten Rasthaken ausgebildet ist, der in eine am Basissteg des Einsatzes vorgesehene stufenförmige Ausnehmung eingreift. Gemäß einer weiteren Ausgestaltung der Erfindung kann der Aufnahmeraum für die Schenkel der U-förmigen Bereiche durch den genannten Steg des Rastelementes und einen mehrfach abgewinkelten Gehäusesteg im Inneren der Fernsprechstation begrenzt werden.

Um insbesondere bei Verwendung der Fernsprechstation als Wandgerät die Gefahr eines unerwünschten Abbrechens der über den Randbereich der Ablagemulde hinausragenden Schenkelpaare bei unsachgemäßem Zugriff zum Handapparat zu verringern, können zur Erhöhung der Steifigkeit des Einsatzes die Schenkel der U-förmigen Bereiche des Einsatzes über Versteifungsrippen untereinander verbunden sein.

Die Erfindung soll im folgenden anhand eines Ausführungsbeispiels näher erläutert werden.

Es zeigt
Figur 1 eine Aufsicht auf einen Teilbereich einer Fernsprechstation mit eingebrachtem Einsatz,
Figur 2 eine geschnittene Seitenansicht des Aufnahmebereiches für den Einsatz längs der Schnittlinie A-B ohne Einsatz,
Figur 3 eine geschnittene Seitenansicht des Aufnahmebereiches mit dem für den Tischbetrieb eingebrachten Einsatz längs der Schnittlinie A-B,
Figur 4 eine geschnittene Seitenansicht des Aufnahmebereiches mit dem für den Wandbetrieb eingebrachten Einsatz längs der Schnittlinie A-B.

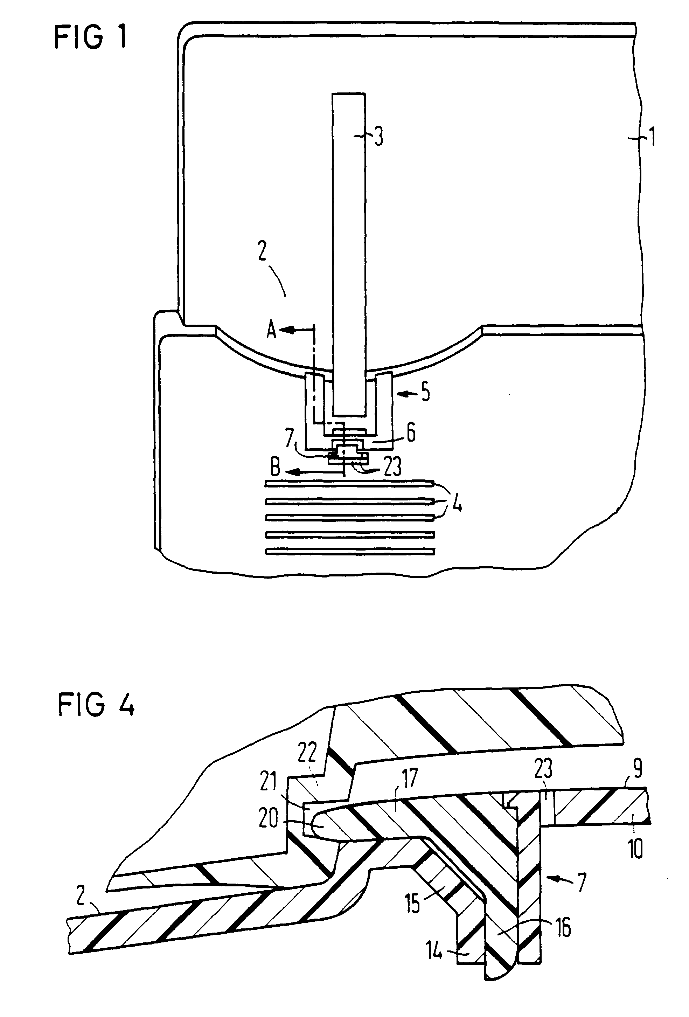

Die Figur 1 zeigt einen Teilbereich einer Fernsprechstation 1 mit einer Ablagemulde 2 für den Hörbereich eines hier nicht dargestellten Handapparates. In der Figur 1 sind weiterhin eine Schaltleiste 3 für den Gabelumschalter der Fernsprechstation sowie ein Gitter 4 für einen Lautsprecher zu erkennen.

Bei Fernsprechstationen 1 mit einer flachen Ablagemulde 2 besteht die Gefahr, den Handapparat leicht versetzt aufzulegen, ohne daß es vom Benutzer bemerkt wird, so daß keine Betätigung des Gabelumschalters erfolgt und die Station für weitere Anrufe nicht mehr benutzbar ist. Um eine Abhilfe zu schaffen, ist in diesem Fall die in Auflagerichtung des Handapparates mittig angeordnete Schaltleiste 3 über den Randbereich der Ablagemulde hinaus verlängert. Diese Verlängerung der Schaltleiste hat jedoch zur Folge, daß die bisher zur Anwendung gelangenden Einsätze, mit denen Fernsprechstationen vom Tisch- auf den Wandbetrieb umrüstbar waren und die immer im tiefsten Punkt des Randbereiches der Ablagemulde angeordnet waren, nicht mehr zum Einsatz gelangen können. Im folgenden wird daher ein Einsatz vorgestellt, der auch in diesen Fällen wie auch bei normal gestalteten Fernsprechstationen zur Anwendung gelangen kann.

Bei der hier gezeigten Ausführungsform der Fernsprechstation ist in dem in der Bildebene unten befindlichen Bereich der Ablagemulde 2 der Einsatz 5 für den Betrieb der Fernsprechstation als Tisch- oder Wandgerät verrastbar angeordnet. Dieser Einsatz 5 ist doppel-U-förmig gestaltet, wobei der Basissteg 6 beiden U-förmigen Bereichen des Einsatzes gemeinsam zugeordnet ist und diese Bereiche in einem Winkel von 90° zueinander angeordnet sind. Weiterhin ist ein federndes Rastelement 7 zu ersehen, mittels dem eine definierte Rastlage des Einsatzes vorgegeben ist.

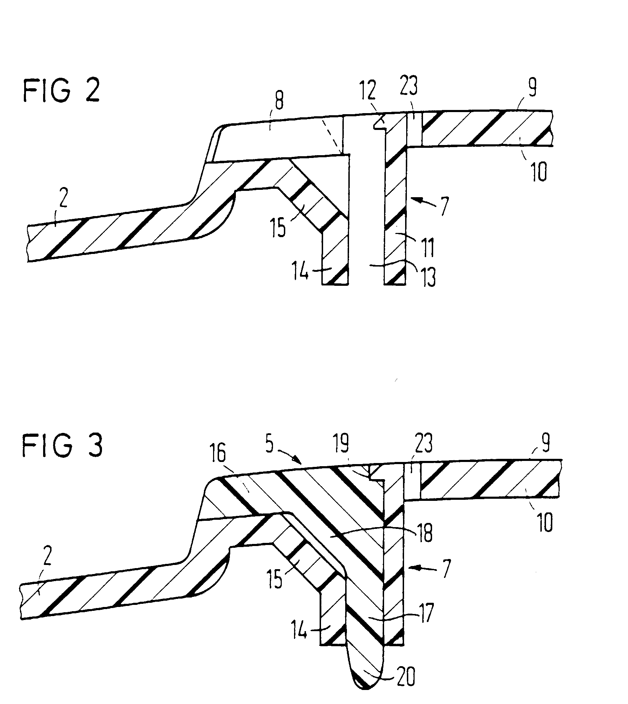

Bei der in Figur 2 dargestellten geschnittenen Seitenansicht des Aufnahmebereiches 8 für den Einsatz 5 sind mit 2 die Ablagemulde und mit 7 das Rastelement bezeichnet. Der Aufnahmebereich 8 ist dabei so bemessen, daß er der Materialstärke des Einsatzes 5 entspricht, so daß der Einsatz jeweils bündig mit der Oberfläche 9 des Fernsprechergehäuses 10 abschließt. Das Rastelement selbst wird durch einen an einem federnden Steg 11 in seinem einen freien Endbereich angeordneten und zu dem Aufnahmebereich 8 weisenden Rasthaken 12 gebildet. Der Steg 11 begrenzt einerseits den Aufnahmeraum 13 für jeweils einen U-förmigen Bereich des Einsatzes 5, während der Aufnahmeraum 13 andererseits durch einen mehrfach abgewinkelten und in die Fernsprechstation hineinragenden Gehäusesteg 14 begrenzt wird. Dabei dient die Abschrägung 15 des Gehäusesteges 14 zum leichteren Einbringen des Einsatzes 5 in seinen Aufnahmebereich 8.

Die Figur 3 zeigt den eingebrachten Einsatz 5 bei Verwendung der Fernsprechstation als Tischgerät. Der Einsatz 5 besitzt zwei unterschiedlich lange Schenkelpaare 16 und 17, wobei das Schenkelpaar 16 für den Tischbetrieb der Fernsprechstation und das Schenkelpaar 17 für den Wandbetrieb der Fernsprechstation Verwendung findet. Diese Schenkelpaare 16 und 17 sind über Versteifungsrippen 18 miteinander verbunden, um die Steifigkeit des Einsatzes 5 zu erhöhen. Dabei ist das Schenkelpaar 16 bezüglich seiner Länge so bemessen, daß es im montierten Zustand bündig mit der Ablagemulde 2 für den Handapparat abschließt, so daß ein unbehindertes Abheben des Handapparates vorgenommen werden kann. Der Einsatz weist weiterhin an seinen beiden U-förmigen Bereichen gemeinsamen Basissteg 6 eine stufenförmige Ausnehmung 19 auf, in die im eingebrachten Zustand des Einsatzes 5 der Rasthaken 12 des Rastelementes 7 eingreift. In diesem Zustand stützt sich jeweils die Versteifungsrippe 18 an der Abschrägung 15 des Gehäusesteges 14 ab und bewirkt somit einen sicheren Halt des Einsatzes 5 innerhalb des Aufnahmeraumes 13.

In Figur 4 ist die Verwendung des Einsatzes 5 bei Wandbetrieb der Fernsprechstation dargestellt. In diesem Fall wird das kürzere Schenkelpaar 16 des Einsatzes 5 in den Aufnahmeraum 13 eingedrückt, wobei im Endzustand wiederum eine Rastverbindung der stufenförmigen Ausnehmung 19 am Basissteg 6 mit dem Rasthaken 12 des Rastelementes 7 zustandekommt. Das längere Schenkelpaar 17 des Einsatzes überragt den Außenbereich der Ablagemulde 2 für den Handapparat. Dieser überstehende Bereich 20 des Schenkelpaares 17 greift in eine ihm formmäßig in etwas entsprechende Vertiefung 21 im hier nur angedeuteten Handapparat 22 in dessen Hörbereich ein und verhindert somit bei Wandbetrieb der Fernsprechstation 1 ein unerwünschtes Herausgleiten des Handapparates 22 aus der Ablagemulde 2 der Fernsprechstation 1.

Das jeweilige Umrüsten von Tisch- auf Wandbetrieb läßt sich durch einfaches Zurückdrücken des Rastelementes 7 in die Öffnung 23 von Hand, Herausziehen des Einsatzes 5, Drehen des Einsatzes um 180° und anschließendes Eindrücken des gewünschten Schenkelpaares 16 oder 17 in den Aufnahmeraum 13 erreichen.

## Patentansprüche

1. Fernsprechstation (1) für Tisch- und Wandbetrieb mit zumindest einer im stationären Ablageteil (10) an dessen Außenfläche vorgesehenen Ablagemulde (2) für den Handapparat (22), wobei im Randbereich der Ablagemulde (2) ein Einsatz (5) in einen von außen frei zugänglichen Aufnahmebereich (8) einbringbar ist, wobei der Einsatz (5) bei Verwendung der Fernsprechstation (1) als Tischgerät mit dem Ablagebereich der Ablagemulde bündig abschließt, während der Einsatz (5) bei Verwendung der Fernsprechstation als Wandgerät den Randbereich der Ablagemulde (2) überragt und mit diesem überragenden Bereich in eine Vertiefung (21) im Handapparat (22) eingreift, **dadurch gekennzeichnet,** daß der Einsatz (5) doppel-U-förmig gestaltet ist, wobei ein Basissteg (6) beiden unter einem Winkel von 90° angeordneten U-förmigen Bereichen des Einsatzes (5) gemeinsam zugeordnet ist, daß weiterhin die Schenkel (16, 17) der U-förmigen Bereiche des Einsatzes (5) unterschiedlich lang gestaltet sind und je nach Verwendungszweck der Fernsprechstation als Tisch- oder Wandgerät in einen Aufnahmeraum (13) im Inneren der Fernsprechstation (1) einbringbar sind, wobei ferner im eingebrachten Zustand des Einsatzes (5) ein federndes Rastelement (7) mit dem Einsatz (5) verrastet.

2. Fernsprechstation nach Anspruch 1, **dadurch gekennzeichnet,** daß das Rastelement (7) als federnder Steg (11) mit einem an seinem freien Ende angeordneten Rasthaken (12) ausgebildet ist, der in eine am Basissteg (6) des Einsatzes (5) vorgesehene stufenförmige Ausnehmung eingreift.

3. Fernsprechstation nach Anspruch 1, **dadurch gekennzeichnet,** daß der Aufnahmeraum (13) für die Schenkel (16, 17) der U-förmigen Bereiche durch den genannten Steg (11) des Rastelementes (7) und einen mehrfach abgewinkelten Gehäusesteg (14) im Inneren der Fernsprechstation begrenzt wird.

4. Fernsprechstation nach Anspruch 1, **dadurch gekennzeichnet,** daß die Schenkel (16, 17) der U-förmigen Bereiche des Einsatzes (5) über Versteifungsrippen (18) untereinander verbunden sind.

## Claims

1. Wall- or desk-mounted telephone (1) having at least one storage recess (2) provided on the external surface of the stationary storage component (10) for the handset (22), it being possible in the edge region of the storage recess (2) to introduce an insert (5) into a receptacle area (8) which is freely accessible from the outside, the insert (5) terminating flush with the storage region of the storage recess when the telephone (1) is used as a desk-mounted device, while the insert (5) projects beyond the edge region of the storage recess (2) and engages with this projecting region in a depression (21) in the handset (22) when the telephone is used as a wall-mounted device, characterized in that the insert (5) is in the shape of a double U, a base web (6) being assigned jointly to both U-shaped regions of the insert (5) which are arranged at an angle of 90°, in that, furthermore, the legs (16, 17) of the U-shaped regions of the insert (5) are of different lengths and, depending on the intended use of the telephone as a desk-mounted or wall-mounted device, can be introduced into a receptacle space (13) in the interior of the telephone (1), a sprung locking element (7) additionally locking to the insert (5) when the insert (5) is in the introduced state.

2. Telephone according to Claim 1, characterized in that the locking element (7) is constructed as a resilient web (11) with a locking hook (12) which is arranged at its free end and which engages in a step-shaped recess provided on the base web (6) of the insert (5).

3. Telephone according to Claim 1, characterized in that the receptacle space (13) for the legs (16, 17) of the U-shaped regions is bounded by the aforesaid web (11) of the locking element (7) and a housing web (14), which is bent repeatedly, in the interior of the telephone.

4. Telephone according to Claim 1, characterized in that the legs (16, 17) of the U-shaped regions of the insert (5) are connected to one another by means of reinforcement ribs (18).

## Revendications

1. Poste téléphonique (1) destiné à fonctionner en tant qu'appareil de bureau et en tant qu'appareil mural, comportant au moins une cuvette (2) pour la réception du combiné (22), qui est prévue à la surface extérieure de la partie (10) fixe de réception, un insert (5) pouvant être mis en place dans une zone (8) de réception, libre d'accès de l'extérieur, dans la zone du bord de la cuvette (2) de réception, l'insert (5) étant à fleur de la zone de réception de la cuvette de réception, lorsque le poste téléphonique (1) est utilisé en tant qu'appareil de bureau, tandis que l'insert (5) dépasse de la zone du bord de la cuvette (2) de réception et s'engage par cette zone qui dépasse dans un renforcement (21) du combiné (22), lorsque le poste téléphonique est utilisé en tant qu'appareil mural, caractérisé en ce que l'insert (5) est en forme de U double, une barrette (6) de base étant associée en commun aux deux zones de l'insert (5) en forme de U disposées à un angle de 90°, les branches (16, 17) des zones en forme de U de l'insert (5) sont en outre de longueurs différentes et peuvent être mises en place les unes ou les autres dans une chambre (13) de réception à l'intérieur du poste (1) téléphonique, suivant que le poste téléphonique est destiné à être utilisé en tant qu'appareil de bureau ou en tant qu'appareil mural, un élément (7) d'encliquetage élastique s'encliquetant en outre avec l'insert (5) lorsque l'insert (5), est mis en place.

2. Poste téléphonique suivant la revendication 1, caractérisé en ce que l'élément (7) d'encliquetage est sous forme d'une barrette (11) élastique à l'extrémité libre de laquelle est disposé un crochet (12) d'encliquetage, qui s'engage dans un évidement étagé prévu sur la barrette (6) de base de l'insert (5).

3. Poste téléphonique suivant la revendication 1, caractérisé en ce que la chambre (13) de réception des branches (16, 17) des zones en forme de U sont délimitées par ladite barrette (11) de l'élément (7) d'encliquetage et par une barrette (14) coudée plusieurs fois à l'intérieur du poste téléphonique.

4. Poste téléphonique suivant la revendication 1, caractérisé en ce que les branches (16, 17) des zones en forme de U de l'insert (5) sont reliées entre elles par l'intermédiaire de renforts (18).
